# EUROPÄISCHE PATENTSCHRIFT

(11) **EP 2 842 809 B1**
(45) Veröffentlichungstag und Bekanntmachung des Hinweises auf die Patenterteilung: **14.02.2018**
(21) Anmeldenummer: 14182292.4
(22) Anmeldetag: 26.08.2014
(51) Int. Cl.: B60R 9/06, B60R 9/10

(54) **Lastenträger**
Load carrier
Porte-charge

(30) Priorität: 28.08.2013 DE 202013103898 U
(43) Veröffentlichungstag der Anmeldung: 04.03.2015
(73) Patentinhaber: Thule NV, 8930 Menen (BE)
(72) Erfinder: Zwanenburg, Guido, 9031 Drongen (BE); Coucke, Davy, 8530 Harelbeke (BE)
(74) Vertreter: Wallentin, Lars

(56) Entgegenhaltungen:
- WO-A1-02/096710
- WO-A1-2004/048153
- DE-A1- 19 821 608
- DE-A1-102007 015 603
- DE-U1- 9 413 102
- FR-A1- 2 804 074

## Beschreibung

Die Erfindung betrifft einen Lastenträger, insbesondere für Fahrräder.

Derartige Lastenträger dienen dazu, beispielsweise Fahrräder auf einer Deichsel eines Campinganhängers zum Transport zu befestigen.

Als nächstliegender Stand der Technik wird WO2004/048153 angesehen, das einen Lastenträger mit den Merkmalen des Oberbegriffs des Anspruchs 1 offenbart.

Die meisten Campinganhänger weisen im Bereich oberhalb der Deichsel einen mit einer Klappe zugänglichen Stauraum auf, bei welchem in der Regel die Klappe zum Öffnen nach oben oder zur Seite geschwenkt wird. Im Falle, dass ein Lastenträger auf der Deichsel befestigt ist, muss dieser den Schwenkbereich der Klappe des Campinganhängers freigeben, um eine Zugänglichkeit zum Stauraum zu gewähren.

Aus dem Stand der Technik bekannte Lastenträger weisen einen Basisrahmen, der mit der Deichsel verbunden ist, und eine Plattform auf, die an dem Basisrahmen um eine Schwenkachse eines Gelenks schwenken kann. Ein Fahrrad wird an der Plattform mit herkömmlichen aus dem Stand der Technik bekannten Befestigungsmitteln, wie Riemen um die Fahrradfelgen und einer Haltevorrichtung zwischen Fahrradrahmen und Plattform, befestigt. Ferner weisen derartige Lastenträger ein Seil oder ein klappbares Gestänge auf, das den Schwenkwinkel der Plattform zusammen mit dem Fahrrad um das Gelenk begrenzt.

Aufgrund des Anbringungsortes des Lastenträgers auf der Deichsel eines Campinganhängers, aufgrund des am Lastenträger befestigten Fahrrades und aufgrund des begrenzten Raums zwischen dem Zugfahrzeug und dem Campinganhänger, berührt in der Regel beim Schwenken des Lastenträgers das Fahrrad das Zugfahrzeug beziehungsweise Auto.

Somit ist es also möglich, dass das Fahrrad beim Neigen des Lastenträgers beziehungsweise der Plattform das Auto berührt und dieses beschädigt.

Daher ist es Aufgabe der vorliegenden Erfindung, einen Lastenträger derart auszubilden, dass dieser eine Einstellung des Schwenkwinkels zwischen Basisrahmen und Plattform zulässt, der auf den individuellen Abstand zwischen einem Zugfahrzeug und einem Campinganhänger anpassbar ist.

Die vorgenannte Aufgabe wird erfindungsgemäß durch die Merkmale des unabhängigen Anspruchs gelöst.

Weitere vorteilhafte Ausführungsbeispiele der vorliegenden Erfindung sind Gegenstand der Unteransprüche.

Erfindungsgemäß ist es vorgesehen, dass ein Lastenträger, insbesondere für Fahrräder, einen Basisrahmen, der mit einem Fahrzeug verbindbar ist, eine Plattform, die an dem Basisrahmen um eine Schwenkachse eines Gelenks schwenkbar angeordnet ist, und ein Verbindungselement mit mindestens zwei Angriffspunkten und einem flexiblen Bereich zwischen den Angriffspunkten aufweist, wobei ein erster Angriffspunkt an dem Basisrahmen und ein zweiter Angriffspunkt an der Plattform angeordnet ist. Mit Hilfe dieser Anordnung kann ein Schwenkwinkel der Plattform um das Gelenk vorgegeben werden, der von der Anordnung des Gelenks und den Angriffspunkten auf dem Basisrahmen und der Plattform definiert wird.

Vorzugsweise ist wenigstens einer der Angriffspunkte entlang einer vorbestimmten Bahnkurve verschiebbar. Die Verschiebbarkeit erlaubt es, einen Schwenkwinkel der Plattform um das Gelenk so einzustellen, dass der Schwenkwinkel beliebig auf die individuellen Bedürfnisse angepasst werden kann. Folglich ist bei Anbringung des Lastenträgers auf einer Deichsel eines Campinganhängers der Schwenkwinkel auf beispielsweise den Abstand zwischen Zugfahrzeug und daran angeordnetem Campinganhänger einstellbar. Dadurch wird sichergestellt, dass bei einer beliebigen Kombination von Campinganhänger und Zugfahrzeug ein Kontakt der schwenkbaren Plattform bzw. eines daran befestigten Fahrrads mit dem Zugfahrzeug vermieden werden kann. Folglich können Lackschäden und Beulen am Zugfahrzeug sowie Lackschäden und Verformungen am Fahrrad bzw. an der Plattform ebenfalls vermieden werden.

Günstigerweise weist die vorbestimmte Bahnkurve zumindest eine Richtungskomponente auf, die parallel zur Schwenkachse ist.

Mit anderen Worten ausgedrückt, weist die vorbestimmte Bahnkurve, entlang welcher wenigstens einer der Angriffspunkte verschiebbar ist, eine Verschiebbarkeit auf, die parallel zur räumlichen Orientierung der Schwenkachse ist. Das heißt, dass wenigstens einer der Angriffspunkte außerhalb einer Ebene, in der der Schwenkwinkel liegt bzw. die der Schwenkwinkel um die Schwenkachse des Gelenks aufspannt bzw. die im Wesentlichen senkrecht zur Schwenkachse orientiert ist, bewegt beziehungsweise verschoben werden kann. Selbstverständlich ist auch eine Bewegung innerhalb der vom Schwenkwinkel aufgespannten Ebene möglich. Auch ist eine Kombination von Bewegungsrichtungen für wenigstens einen der Angriffspunkte innerhalb und außerhalb der Ebene des Schwenkwinkels denkbar.

Des Weiteren ist es von Vorteil, wenn die vorbestimmte Bahnkurve einen geradlinigen oder bogenförmigen Verlauf aufweist. Entlang dieses Verlaufs kann wenigstens einer der Angriffspunkte verschoben werden. Wie oben angedeutet, kann die vorbestimmte Bahnkurve zumindest eine Richtungskomponente parallel zur Schwenkachse, oder anders ausgedrückt, senkrecht zu der vom Schwenkwinkel aufgespannten Ebene, aufweisen. Dies trifft vorteilhafterweise auch auf den geradlinigen oder bogenförmigen Verlauf der Bahnkurve zu. Es ist aber auch möglich, dass der geradlinige oder bogenförmige Verlauf innerhalb der Ebene verläuft, die von dem Schwenkwinkel aufgespannt wird bzw. die im Wesentlichen senkrecht zur Schwenkachse orientiert ist. Selbstverständlich ist auch eine Kombination möglich, das heißt, dass die Bahnkurve sowohl parallel zur Schwenkachse als auch senkrecht zur Schwenkachse beziehungsweise in einer Ebene, aufgespannt vom Schwenkwinkel, verläuft. Mithilfe des vorgestellten Verlaufs der Bahnkurve kann der Schwenkwinkel der Plattform um das Gelenk eingestellt werden.

Bevorzugterweise ist durch Verschieben von mindestens einem der zwei Angriffspunkte entlang der Bahnkurve der maximale Schwenkwinkel um das Gelenk veränderbar. Durch das Verschieben ist eine stufenlose Einstellung des Schwenkwinkels möglich. Dementsprechend kann in Anordnung des Lastenträgers auf einer Deichsel eines Campinganhängers der Schwenkwinkel der Plattform um das Gelenk derart eingestellt werden, dass ein Fahrrad, das auf der Plattform angeordnet ist, keinen Kontaktpunkt an einem Zugfahrzeug aufweist. Dadurch werden Lack und Blechschäden vermieden, die durch den Kontakt aufgrund des Neigens der Plattform des Lastenträgers beziehungsweise des Fahrrades entstehen. Auch ist es somit möglich, eine Schwenkeinrichtung auf einfache Weise mit geringen Herstellungskosten zu realisieren.

Günstigerweise ist das Verbindungselement, insbesondere der flexible Bereich, zum Aufnehmen von Zugkräften ausgebildet. Unter einem flexiblen Bereich wird ein Bereich verstanden, der nicht starr ausgebildet ist, wie zum Beispiel eine Stange oder ein langgestrecktes Profil. Vielmehr wird unter einem flexiblen Bereich ein Abschnitt verstanden, der vorzugsweise zusammenfaltbar und/oder zusammenlegbar ist. Eine flexible Ausgestaltung hat den Vorteil, dass diese im Vergleich ein geringeres Gewicht als ein starr ausgebildete aufweist. In einer konkreten Ausgestaltung kann es sich beispielsweise um ein Seil, einen Riemen, einen Gurt oder dergleichen handeln.

Bevorzugterweise weist das Verbindungselement eine konstante Gesamtlänge auf. Somit bleibt die Länge des Verbindungselements stets konstant, auch für den Fall, dass sich beispielsweise die räumliche Position von einem Angriffspunkt, der an dem Verbindungselement angeordnet ist, an dem Basisrahmen und/oder an der Plattform eines Lastenträgers verändern kann. Auch hat eine konstante Gesamtlänge des Verbindungselements den Vorteil, dass eine hohe mechanische Stabilität sowie eine hohe Ausfallsicherheit erreichbar ist, ohne Vorrichtungen, die eine veränderbare Länge vorsehen, um einen Schwenkbereich beziehungsweise einen Schwenkwinkel eines Lastenträgers anzupassen.

Ferner ist es bevorzugt, wenn der Basisrahmen und/oder die Plattform eine Schienenführung aufweisen. Eine Schienenführung hat den Vorteil, dass mit Hilfe dieser eine Verschiebbarkeit von zum Beispiel mindestens einem Angriffspunkt auf einfache Weise realisierbar ist. Idealerweise ist die Schienenführung als Schwalbenschwanzführung ausgebildet. Somit wird eine einfache jedoch mechanisch stabile Konstruktion gewährleistet, die nicht nur kostengünstig sondern auch wartungsarm ist.

Vorteilhafterweise ist die Schienenführung transversal, parallel und/oder diagonal bezüglich der Schwenkachse des Lastenträgers anordenbar. Bei Anordnung eines Angriffspunkts in der Schienenführung gewährleistet dies eine Verstellung des Angriffspunkts in beliebig räumlicher Richtung. Aufgrund dieser hohen Variabilität ist es möglich, den Schwenkwinkel um das Gelenk beziehungsweise um die Schwenkachse auf einen individuellen Schwenkwinkel beziehungsweise Schwenkbereich einzustellen. Dementsprechend können je nach Anwendungsfall beliebige Winkel eingestellt werden.

Ferner wird bevorzugt, dass mindestens ein Angriffspunkt in der Schienenführung anordenbar ist. Auf diese Weise kann der mindestens eine Angriffspunkt, wie bereits oben angedeutet, transversal, parallel und/oder diagonal bezüglich der Schwenkachse des Lastenträgers beziehungsweise entlang einer vorbestimmten Bahnkurve, die vorzugsweise mit einer Richtungskomponente parallel zur Schwenkachse ausgerichtet ist, geführt werden.

Ferner ist es von Vorteil, wenn mindestens einer der Angriffspunkte eine Schraube, einen Niet, eine Metallplatte und/oder einen Schwalbenschwanz aufweist. Vorteilhafterweise dienen die vorgenannten Gegenstände als Führungsmittel zum verschiebbaren Eingriff in eine Schienenführung. Mithilfe beispielsweise einer Schraube oder eines Schwalbenschwanzes, der in eine Schienenführung, wie zum Beispiel eine Schwalbenschwanzführung, eingreift, ist ein sicherer Halt des mindestens einen Angriffspunkts innerhalb der Schienenführung gewährleistet, bei gleichzeitiger Beweglichkeit entlang der Schiene. Hierbei gibt die Schienenführung vorteilhafterweise eine vorbestimmte Bahnkurve vor.

Günstigerweise weist der flexible Bereich ein Kabel, eine Kette, eine Schnur, einen Riemen, einen Gurt, einen Draht oder ein Zugband auf. Die vorgestellten Möglichkeiten zur Ausgestaltung des flexiblen Bereichs haben den Vorteil, dass diese zusammenlegbar und/oder faltbar sind und somit wenig Platz benötigen, wobei diese Gegenstände zur Aufnahme von Zugkräften ausgebildet sind. Das heißt, dass ein Kabel, eine Kette, eine Schnur, ein Riemen usw. lediglich durch eine Zugkraft beansprucht werden kann, da diese keine Druckkräfte aufnehmen können. Vielmehr dient eine Druckkraft dazu, ein Kabel, eine Kette, eine Schnur, ein Zugband usw. zusammenzuklappen beziehungsweise zusammenzulegen. Der Vorteil an der Verwendung eines flexiblen Bereichs liegt darin, dass er in Ausgestaltung eines Kabels, eines Riemens usw. wenig Platz benötigt und nur einem sehr geringen mechanischen Verschleiß unterliegt.

Des Weiteren ist es von Vorteil, wenn das Verbindungselement einen Werkstoffverbund aus Kunststoffen, einen Stahl oder eine Stahllegierung aufweist. Auch ist der Einsatz von Werkstoffen wie Kunststoff, Metall oder dessen Legierungen möglich. Mithilfe der vorgenannten Werkstoffe kann das Verbindungselement kostengünstig, schnell, einfach und robust ausgestaltet werden.

Bevorzugterweise ist an dem flexiblen Bereich des Verbindungselements mindestens ein dritter Angriffspunkt angeordnet, der vorteilhafterweise an dem Basisrahmen und/oder an der Plattform angeordnet ist. Durch diesen weiteren Angriffspunkt kann der flexible Bereich des Verbindungselements um den dritten Angriffspunkt umgelenkt werden, da vorteilhafterweise der erste Angriffspunkt am Basisrahmen mit dem zweiten Angriffspunkt an der Plattform über den flexiblen Bereich verbunden ist. Somit wird durch den dritten Angriffspunkt eine Umlenkung an dem Basisrahmen und/oder an der Plattform möglich.

Günstigerweise definiert ein Wirkabschnitt des Verbindungselements einen maximalen Schwenkwinkel um das Gelenk zwischen dem Basisrahmen und der Plattform, wobei sich der Wirkabschnitt zwischen dem ersten Angriffspunkt des Verbindungselements und dem mindestens einen dritten Angriffspunkt erstreckt. Idealerweise ist die Länge des Wirkabschnitts durch die Position des mindestens einen dritten Angriffspunkts relativ zu den Positionen der mindestens zwei Angriffspunkte des Verbindungselements variabel, wodurch der maximale Schwenkwinkel um das Gelenk veränderbar ist.

Anders ausgedrückt kann durch Umlenkung des flexiblen Bereichs des Verbindungselements um den mindestens einen dritten Angriffspunkt der relative räumlich Abstand zwischen dem ersten und dem zweiten Angriffspunkt, wobei der erste an dem Basisrahmen und der zweite an der Plattform angeordnet ist, verändert werden. Folglich kann durch die räumliche Positionierung der genannten drei Angriffspunkte (des ersten, zweiten und dritten Angriffspunkts) die relative Entfernung zwischen dem ersten und zweiten Angriffspunkt eingestellt werden. Somit wird durch Einstellung des Wirkabschnitts bzw. dessen Länge bzw. der Entfernung zwischen dem ersten Angriffspunkt und dem mindestens einen dritten Angriffspunkt der Schwenkwinkel um das Gelenk beeinflusst. Folglich ist durch die relative Lageveränderung der drei Angriffspunkte der Schwenkwinkel der Plattform um das Gelenk variabel einstellbar ist.

Bevorzugterweise weist das Verbindungselement eine Gesamtlänge auf, die sich aus der Länge des Wirkabschnitts und der Länge eines Stellabschnitts zusammensetzt, wobei der Wirkabschnitt die Plattform und den Basisrahmen verbindet, und wobei der Stellabschnitt einen Angriffspunkt des Verbindungselements und den mindestens einen dritten Angriffspunkt verbindet. Mit anderen Worten ausgedrückt, setzt sich die Gesamtlänge des Verbindungselements aus der Summe von Wirkabschnitt und Stellabschnitt bzw. deren Längen zusammen. Dabei erstreckt sich vorteilhafterweise der Wirkabschnitt von dem ersten Angriffspunkt am Basisrahmen zum mindestens einen dritten Angriffspunkt, wohingegen der sich der Stellabschnitt zwischen dem mindestens einen dritten Angriffspunkt dem zweiten Angriffspunkt an der Plattform erstreckt.

Des Weiteren ist es günstig, wenn der mindestens eine dritte Angriffspunkt am Basisrahmen und/oder an der Plattform beliebig anordenbar ist. Beliebig anordenbar heißt in diesem Zusammenhang, dass der mindestens eine dritte Angriffspunkt an vorbestimmten beziehungsweise vorgesehenen Positionen oder an beliebiger Position beispielsweise innerhalb einer Schienenführung befestigbar ist. Auf diese Weise wird eine hohe Flexibilität und Variabilität eines Lastenträgers erreicht, wobei ein Schwenkwinkel um eine Schwenkachse somit beliebig auf einen beliebigen Schwenkwinkel einstellbar ist.

Idealerweise ist der Winkel zwischen Wirk- und Stellabschnitt einstellbar. Dies kann auf einfache Weise erreicht werden, indem beispielsweise die Position des mindestens einen dritten Angriffspunkts relativ zu dem ersten Angriffspunkt verändert wird, wobei der eine Angriffspunkt vorteilhafterweise an dem Basisrahmen und der andere an der Plattform angeordnet ist. Bei Veränderung der relativen Anordnung der Angriffspunkte zueinander bleibt also die Länge von Wirk- und Stellabschnitt unverändert, wobei trotzdem der Schwenkwinkel verändert werden kann. So ist z.B. der Schwenkwinkel maximal bei einem Winkel von 90 Grad zwischen dem Stell- und dem Wirkabschnitt. Je stärker, also je stumpfer oder je spitzer, der Winkel zwischen den beiden Abschnitten wird, desto kleiner wird der Schwenkwinkel zwischen Basisrahmen und Plattform.

Bevorzugterweise sind der zweite Angriffspunkt des Verbindungselements und der mindestens eine dritte Angriffspunkt fest mit dem Lastenträger verbunden. Somit sind diese beiden Angriffspunkte relativ zum Lastenträger nicht bewegbar. Vorzugsweise ist der erste Angriffspunkt des Verbindungselements beweglich am Lastenträger ausgebildet, um die Länge des Wirkabschnitts durch Veränderung der Position des ersten Angriffspunkts zu variieren. Das bedeutet, dass der erste Angriffspunkt relativ zu dem mindestens einen dritten und zweiten Angriffspunkt beweglich ist, wobei die Länge des Wirkabschnitts bzw. die Entfernung zwischen dem ersten Angriffspunkts des Verbindungselements und dem mindestens einen dritten Angriffspunkt verändert wird. Dies verändert ebenfalls den Abstand beim Schwenken zwischen der Plattform und dem Basisrahmen. Durch Variation des Abstandes bzw. der Länge der Abschnitte (Stell- und Wirkabschnitt) wird auch der Schwenkwinkel zwischen Plattform und Basisrahmen variiert. Folglich ist durch die Beweglichkeit des ersten Angriffspunkts eine Veränderung des Schwenkwinkels möglich. Dementsprechend kann ein Lastenträger mithilfe des mindestens einen dritten Angriffspunkts an ein Gespann, bestehend aus einem Zugfahrzeug und einem Campinganhänger, an den Bereich zwischen den beiden Fahrzeugen, oberhalb einer Deichsel, angepasst werden beziehungsweise an dessen Schwenkwinkel.

Günstigerweise sind der erste und der zweite Angriffspunkt mit dem Lastenträger fest verbunden. Da sich vorteilhafterweise der flexible Bereich des Verbindungselements zwischen dem ersten und zweiten Angriffspunkt erstreckt, wird also auf diese Weise eine Verbindung zwischen Basisrahmen und Plattform geschaffen. Diese Verbindung beschränkt den Schwenkwinkel um das Gelenk.

Vorzugsweise ist der mindestens eine dritte Angriffspunkt an dem Lastenträger beweglich ausgebildet, um die Länge des Wirkabschnitts durch Veränderung der Position des mindestens einen dritten Angriffspunkts zu variieren. Das bedeutet, dass der mindestens eine dritte Angriffspunkt relativ zu dem ersten und zweiten Angriffspunkt beweglich ist, wobei die Länge des Wirkabschnitts beziehungsweise die Entfernung zwischen dem ersten Angriffspunkts des Verbindungselements und dem mindestens einen dritten Angriffspunkt verändert wird, wodurch ebenfalls der Abstand beim Schwenken zwischen der Plattform und dem Basisrahmen verändert wird. Durch Variation des Abstandes wird auch der Schwenkwinkel zwischen Plattform und Basisrahmen variiert. Folglich ist durch die Beweglichkeit des mindestens einen dritten Angriffspunkts eine Veränderung des Schwenkwinkels möglich. Dementsprechend kann ein Lastenträger mithilfe des mindestens einen dritten Angriffspunkts an ein Gespann, bestehend aus einem Zugfahrzeug und einem Campinganhänger, an den Bereich zwischen den beiden Fahrzeugen, oberhalb einer Deichsel, angepasst werden beziehungsweise an dessen Schwenkwinkel.

Auch ist es günstig, wenn der mindestens eine dritte Angriffspunkt außerhalb einer Verbindungsgeraden zwischen erstem und zweitem Angriffspunkt des Verbindungselements liegt. Auf diese Weise kann zumindest ein Dreieck aus dem ersten, dem zweiten und dem mindestens einen dritten Angriffspunkt realisiert werden. Unter der Voraussetzung, dass die vorher genannten drei Angriffspunkte miteinander über z.B. den flexiblen Bereich verbunden sind, und dass, das Verbindungselement, an dem die mindestens drei Angriffspunkte angeordnet sind, vorzugsweise eine konstante Länge aufweisen, kann durch Veränderung des mindestens einen dritten Angriffspunkts die relative Entfernung des ersten zum zweiten Angriffspunkt verändert werden, da diese an dem Basisrahmen beziehungsweise der Plattform angeordnet sind. Auch die relative Änderung der Entfernung der einzelnen Angriffspunkte zueinander durch Veränderung der Position eines Punktes (des ersten, zweiten oder mindestens einen dritten Angriffspunkte) relativ zu den anderen möglich, wenn diese idealerweise über das flexible Element miteinander verbunden sind.

Idealerweise weist der mindestens eine dritte Angriffspunkt eine Laufrolle zur Führung des flexiblen Bereichs auf. Mithilfe einer derartigen Laufrolle kann beispielsweise ein flexibler Bereich eines Verbindungselements auf einfache Weise um den mindestens einen dritten Angriffspunkt geführt werden. Im Falle der Beweglichkeit des mindestens einen dritten Angriffspunkts relativ zu den anderen Angriffspunkten dient die Laufrolle dazu, den flexiblen Bereich ohne scharfkantige Umleitungen beziehungsweise Führungen umzuleiten beziehungsweise weiterzuleiten und somit den flexiblen Bereich zu schonen.

Auch ist es von Vorteil, wenn das Verbindungselement vier Angriffspunkte aufweist. Die vier Angriffspunkte dienen der Lastverteilung und der exakteren Einstellmöglichkeit des Schwenkbereichs. Anders ausgedrückt, ist es von Vorteil, wenn das Verbindungselement einen ersten und einen zweiten Angriffspunkt sowie zwei mindestens dritte Angriffspunkte aufweist.

Idealerweise ist an jedem der zwei Enden des Verbindungselements jeweils ein Angriffspunkt vorgesehen, der an dem Basisrahmen und/oder an der Plattform angeordnet ist, wobei wenigstens einer der vier Angriffspunkte relativ zu den anderen verschiebbar ist. Durch Anordnung zweier Angriffspunkte an dem Basisrahmen, wobei diese an jedem der zwei Enden des Verbindungselements angeordnet sind, ist es vorteilhaft, wenn die weiteren zwei Angriffspunkte an der Plattform angeordnet sind. Eine umgekehrte Anordnung, bei der die zwei an den Enden angeordneten Angriffspunkte an der Plattform angeordnet sind, ist auch möglich. Diese Anordnung erlaubt es, den möglichen Schwenkbereich durch die Angriffspunkte durch die Vielzahl der Angriffspunkte flexibel und mechanisch stabiler zu gestalten, da sich die Kräfte auf die einzelnen Angriffspunkte verteilen können. Durch die zuvor erwähnte relative Verschiebbarkeit wenigstens eines der vier Angriffspunkte ist eine derartige Anordnung auch auf einen beliebigen Schwenkwinkel der Plattform um den Basisrahmen bzw. um das Gelenk einstellbar. Das ermöglicht den Einsatz von beliebigen Gespannen aus Zugfahrzeug und Campinganhänger, unter Vermeidung eines Kontaktbereichs von Plattform und Zugfahrzeug.

Von einer anderen Warte aus betrachtet, ist es günstig, wenn das Verbindungselement relativ zu zumindest einem der Angriffspunkte verschiebbar ist. Dadurch ist es möglich, durch das Verschieben des Verbindungselements relativ zu Angriffspunkten ebenfalls die relative räumliche Beziehung der Angriffspunkte zueinander zu verändern. Folglich kann somit auch ein anderer Schwenkbereich beziehungsweise einen anderen Schwenkwinkel eingestellt werden.

Des Weiteren ist es bevorzugt, dass der erste und zweite Angriffspunkt des Verbindungselements und/oder der mindestens eine dritte Angriffspunkt und/oder ein vierter Angriffspunkt in einer Schienenführung stufenlos verschiebbar sind. Eine Schienenführung hat den Vorteil, dass mit Hilfe dieser eine Verschiebbarkeit von Angriffspunkten auf einfache Weise realisierbar ist. Idealerweise ist die Schienenführung als Schwalbenschwanzführung ausgebildet. Somit wird eine einfache jedoch mechanisch stabile Konstruktion gewährleistet, die nicht nur kostengünstig sondern auch wartungsarm ist.

Die vorher beschriebenen Merkmale, die der Ausbildung eines Lastenträgers dienen, sind frei miteinander kombinierbar.

So ist es zum Beispiel möglich, dass nur der Basisrahmen eine Schienenführung aufweist, wohingegen die Plattform einen festen Befestigungsort beziehungsweise Punkt vorsieht. Hierbei kann die Schienenführung als Schwalbenschwanzführung ausgebildet sein, deren Führung beziehungsweise vorbestimmte Bahnkurve teilweise parallel und teilweise senkrecht beziehungsweise transversal, parallel oder diagonal bezüglich der Schwenkachse des Lastenträgers anordenbar ist. Auch können die Angriffspunkte beziehungsweise der mindestens eine Angriffspunkt an einem Verbindungselement mit einem entsprechenden Gegenstück zur Schienenführung ausgestattet sein, sodass im vorher genannten Beispiel ein Ende des Verbindungselements beziehungsweise ein Angriffspunkt ein Gegenstück für eine Schwalbenschwanzführung, also einen Schwalbenschwanz, aufweist. Insbesondere ist es von Vorteil, wenn der flexible Bereich des Verbindungselements zwischen den Angriffspunkten einen Riemen oder ein Kabel, vorzugsweise aus einzelnen Metallsträngen zusammengesetzt, aufweist, da dieses witterungsbeständig und flexibel einsetzbar ist. Auch bietet ein Kabel den Vorteil, dass dieses wartungsarm und günstig in der Produktion ist.

Nachstehend wird die Erfindung anhand von Ausführungsbeispielen in Verbindung mit zugehörigen Zeichnungen näher erläutert. In diesen zeigen schematisch:
- Figur 1: eine dreidimensionale Ansicht eines Lastenträgers für Fahrräder, beziehungsweise eines Fahrradträgers in einer Grundposition,
- Figur 2: eine dreidimensionale Ansicht eines Lastenträgers für Fahrräder, beziehungsweise eines Fahrradträgers in einer maximal geschwenkten Position,
- Figur 3: eine dreidimensionale Ansicht eines Fahrradträgers im geneigten Zustand mit einer Begrenzung des Schwenkwinkels, und
- Figuren 4a bis 4f: schematische Ansichten unterschiedlicher Anordnungen von Angriffspunkten am Lastenträger.

In nachfolgender Beschreibung werden gleiche Bezugszeichen für gleiche Gegenstände verwendet.

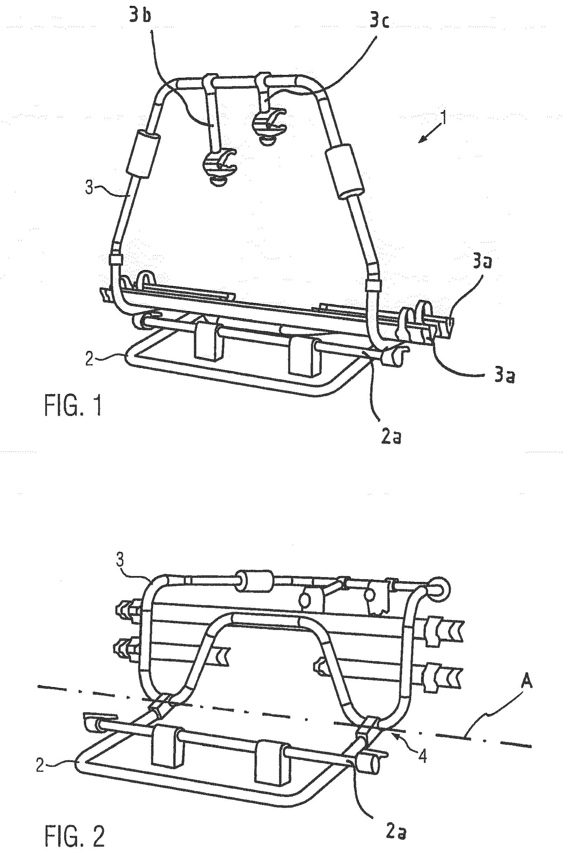

Figur 1 zeigt einen Lastenträger 1 beziehungsweise einen Fahrradträger mit einem Basisrahmen 2 und einer Plattform 3 in einer Grundposition, in der die Plattform 3 auf dem Basisrahmen 2 ruht.

An der Plattform 3 sind Schienen 3a angeordnet, die Räder eines Fahrrades aufnehmen können und mit deren Hilfe ein sicherer Aufstand auf der Plattform 3 gewährleistet wird. Ein Fahrrad (nicht dargestellt) wird ferner durch die Befestigungsarme 3b, 3c an seinem Rahmen an der Plattform 3 befestigt. Auf diese Weise werden zwei voneinander beabstandete Befestigungspunkte, nämlich am Rahmen des Fahrrads und am untersten Aufstandspunkt der Räder des Fahrrades in der Schiene 3a geschaffen, wodurch eine mechanisch stabile Anordnung eines Fahrrads an der Plattform 3 gewährleistet wird.

Figur 2 zeigt den Lastenträger 1 in einer maximal geschwenkten Position, in der der Basisrahmen 3 um ein Gelenk 4 beziehungsweise um die Schwenkachse A der beiden Gelenke 4 geschwenkt ist. Im Vergleich zu Figur 2 ist der Basisrahmen 2 unbeweglich an seiner Position verblieben, da dieser in der Regel an einem Fahrzeug beziehungsweise an einer Deichsel eines Fahrzeuges beziehungsweise eines Campinganhängers befestigt ist.

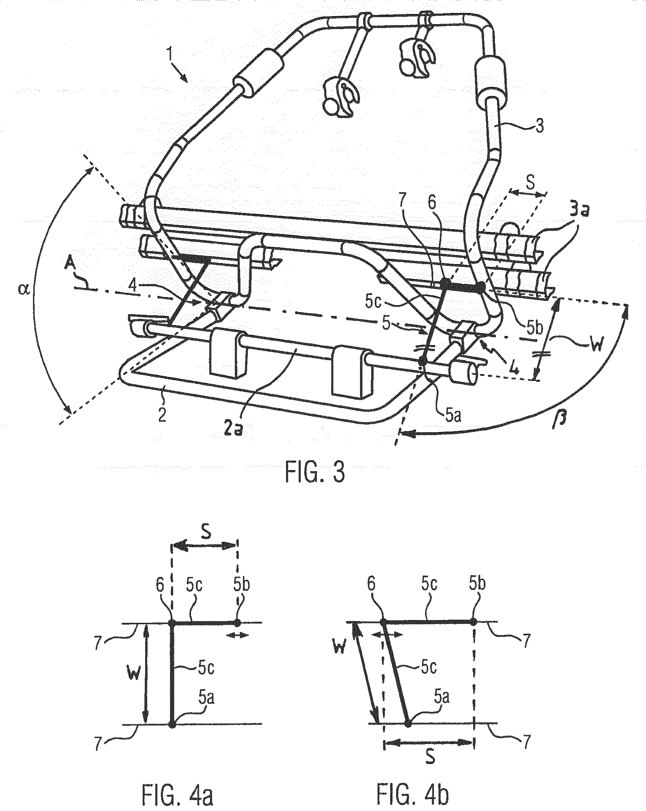

Figur 3 zeigt eine dreidimensionale Ansicht eines Lasten- 1 bzw. Fahrradträgers im geneigten Zustand mit einer Begrenzung des Schwenkwinkels.

Im Vergleich zu Figuren 1 und 2 ist der Lastenträger 1 in Figur 3 zwischen den beiden Positionen aus den Figuren 1 und 2 dargestellt. Hierbei ist unterhalb der Schiene 3a für die Aufnahme von Rädern eines Fahrrads eine Schienenführung 7 angeordnet, die als Schwalbenschwanzführung ausgeführt ist.

In der Schienenführung 7 sind zwei Angriffspunkte 5b und 6 angeordnet. Diese beiden Punkte sind über die Länge eines Stellabschnitts S voneinander beabstandet. Die Angriffspunkte 5b, 6 weisen einen Schwalbenschwanz auf, der in der Schienenführung 7 gehalten und verschoben werden kann. Hierbei gibt die Schwalbenschwanzführung bzw. die Schienenführung 7 eine Bahnkurve vor, entlang welcher die Angriffspunkte 5b, 6 verschoben werden können. Die Bahnkurve kann dabei, wie in Figur 3 gezeigt, im Wesentlichen parallel zur Schwenkachse A orientiert sein. Auch kann die Bahnkurve transversal und/oder diagonal bezüglich der Schwenkachse A des Lastenträgers in der Schienenführung realisiert sein

Des Weiteren ist auf dem Basisrahmen 2 ein weiterer Angriffspunkt 5a angeordnet. Auch dieser kann in einer Schienenführung 7 angeordnet sein, die an dem Basisrahmen 2 befestigt ist. So könnte die Schienenführung 7 am Basisrahmen 2 entlang einer Aufstandsbefestigung 2a des Basisrahmens 2 angeordnet sein. Die Aufstandsbefestigung 2a dient, wie Figur 1 zeigt, der Plattform 3 zum sicheren Aufstehen in der Grundposition, in welcher der Lastenträger 1 zum Transport eines Fahrrads angeordnet wird.

Die drei Angriffspunkte 5a, 5b und 6 sind über ein Verbindungselement, das als flexibles Stahlkabel 5 ausgeführt ist, miteinander verbunden. Das Kabel 5 weist in eine konstante, nahezu unveränderliche Länge auf. Während die Angriffspunkte 5a und 5b fest mit den Enden des Kabels 5 beziehungsweise mit dem Verbindungselement verbunden sind, ist der Angriffspunkt 6 entlang des Kabels 5 und somit relativ zu den Angriffspunkten 5a, b verschiebbar.

Ferner weist der Angriffspunkt 6 eine nicht dargestellte Umlaufrolle auf, mit der das Kabel 5 auf einfache und schonende Weise zwischen den Angriffspunkten 5a, b umgelenkt wird. In Figur 3 ist ferner eine Länge eines Wirkabschnitts W zwischen den Angriffspunkten 5a und 6 sowie eine Länge eines Stellabschnitts S zwischen den Punkten 5b und 6 dargestellt.

Im nachfolgenden wird kurz umrissen, wie sich Stell- und Wirkabschnitt S, W durch Verschieben des Angriffspunkts 6 verändern, wobei die Angriffspunkte 5a, b an ihren jeweiligen Positionen unverändert bleiben.

Durch Veränderung der Position des Angriffspunkts 6 innerhalb der Schienenführung 7 bzw. entlang der Bahnkurve der Schienenführung verändern sich die Längen des Wirk- W und Stellabschnitts S. So wird beispielsweise bei Verschieben des Angriffspunkts 6 in Richtung der Mitte des Lastenträgers 1 beziehungsweise in Figur 3 nach links die Länge des Stellabschnitts S vergrößert, wohingegen sich die Länge des Wirkabschnitts W verkleinert.

Eben durch Veränderung der Länge des Wirkabschnitts W verändert sich der Schwenkwinkel α. Anders ausgedrückt, je kürzer der Wirkabschnitt W beziehungsweise je größer der Stellabschnitt S desto kleiner der Schwenkwinkel α um das Gelenk 4.

Unter der Voraussetzung, dass die Stell- und Wirkabschnitte S, W unverändert bleiben, kann ebenfalls der Schwenkwinkel α um die Schwenkachse A variiert werden.

Dies kann auf einfache Weise dadurch erreicht werden, indem die Position des Angriffspunkts 5a entlang der Schienenführung 7 am Basisrahmen 2 verändert wird. Dabei bleiben die Länge von Wirk- und Stellabschnitt unverändert, jedoch ändert sich der Winkel β zwischen Wirk- und Stellabschnitt W, S.

Bei Verschieben des Angriffspunkts 5a in Figur 3 nach rechts wird der Winkel β spitzer. Je spitzer der Winkel β durch die Verschiebung des Angriffspunkts 5a entlang der Schienenführung 7 ausgebildet ist, desto kleiner wird der Schwenkwinkel α. Dementsprechend hat die Positionsveränderung des Angriffspunkts 5a entlang der Schienenführung 7 zwar keine Veränderung der Länge des Wirkabschnitts W hervorgerufen, jedoch ist auf diese Weise der Schwenkwinkels α wie bei Verschieben des Angriffspunkts 6 entlang der Schienenführung 7 möglich. Bei diesem gesonderten Beispiel ist - streng genommen - der Angriffspunkt 5b nicht notwendig. Für diesen Fall kann der Winkel β zwischen dem Wirkabschnitt W und dem Verlauf der Schienenführung definiert werden.

Im in Figur 3 dargestellten Ausführungsbeispiel wird der größtmögliche Schwenkwinkel α dann erreicht, wenn zwischen Wirk- und Stellabschnitt der Winkel β mit 90 Grad eingestellt wird. Ein stumpfer Winkel β führt zum selben Ergebnis wie ein spitzer, wobei sich der Schwenkwinkel α verkleinert. Zusammengefasst, je stumpfer oder je spitzer, der Winkel zwischen den beiden Abschnitten wird, desto kleiner wird der Schwenkwinkel zwischen Basisrahmen und Plattform.

Auch ist es möglich, den Angriffspunkt 5b entlang der Schienenführung 7 zu verschieben. Dies hat im Wesentlichen denselben Effekt wie ein Verschieben des Angriffspunkts 6. Es ändert sich die Wirk- und Stelllänge W, S entsprechend der Verschieberichtung des Punkts 5b, wobei eine vergrößerte Länge des Stellabschnitts S zu einer verkleinerten Länge des Wirkabschnitts W führt, wodurch der Schwenkwinkel α verkleinert wird. Bei Vergrößerung der Länge des Wirkabschnitts W hingegen vergrößert sich der Schwenkwinkel α.

Figuren 4a bis f zeigen eine vereinfachte, schematisch dargestellte Anordnung der Angriffspunkte 5a, b und 6, wobei die Angriffspunkte in jeweils einer Schienenführung 7 am Basisrahmen und einer an der Plattform geführt werden. Ferner sind die Angriffspunkte 5a, b miteinander über den flexiblen Bereich 5c des Kabels 5 verbunden. Das Kabel 5 weist in den dargestellten Figuren eine konstante, nahezu unveränderliche Länge auf.

Die Angriffspunkte zwischen den Punkten 5a, b sind zwar mit dem Kabel 5 verbunden, jedoch entlang des Kabels 5 beweglich, sodass das Kabel an Umlenkrollen (nicht dargestellt), von dem Angriffspunkt 5a zum Angriffspunkt 5b schonend geführt bzw. umgelenkt wird.

Im Beispiel von Figur 4a sind die Angriffspunkte 5a und 6 fest mit den Schienenführungen 7 verbunden, wobei der Punkt 5b beweglich ist. In Figur 4a wird der Angriffspunkt 5b bewegt, wobei eine Bewegung des Angriffspunkts 5b nach links die Länge des Stellabschnitts S zwischen Angriffspunkten 5b und 6 verkürzt, jedoch die Länge des Wirkabschnitts W zwischen den Angriffspunkten 5a und 6 vergrößert. Dementsprechend bewirkt eine Lageveränderung des Angriffspunkts 5b nach rechts eine Vergrößerung der Länge des Stellabschnitts S und eine Verkleinerung der Länge des Wirkabschnitts W. Auf diese Weise kann der Schwenkwinkel α der Plattform 3 um den Basisrahmen 2 verändert werden.

In Figur 4b wird im Wesentlichen die Anordnung aus Figur 4a gezeigt jedoch mit dem Unterschied, dass diesmal die Angriffspunkte 5a und b in Schienenführungen 7 befestigt sind, wohingegen der Angriffspunkt 6 relativ zu den beiden Angriffspunkten 5a, b beweglich ausgestattet ist.

Eine Bewegung des Angriffspunkts 6 entlang der Schienenführung 7 bewirkt ähnliche Effekte wie bereits erläutert zu Figur 4a, nämlich, dass eine Bewegung nach links die Länge des Stellabschnitts S vergrößert, hingegen die Länge des Wirkabschnitts W verkleinert. Bei einer Bewegung des Angriffspunkts 6 nach rechts sind die Längenveränderungen umgekehrt. Gleichzeitig mit Veränderung der relativen Lage des beweglichen Angriffspunkts 6 wird der Winkel β zwischen Stell- und Wirkabschnitt verändert.

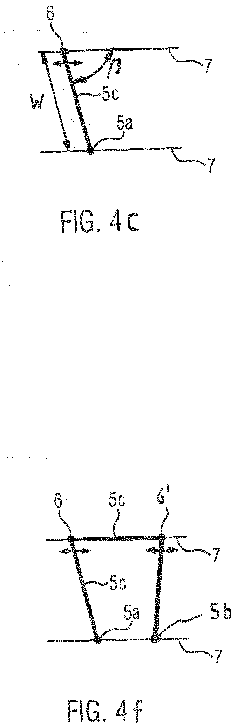

Figur 4c zeigt den beweglichen Angriffspunkt 5a und den fest positionierten Punkt 5b in der jeweiligen Schienenführung 7. Ferner ist der Winkel β gezeigt, dessen einer Schenkel auf der Schienenführung 7 auf Seiten des zweiten Angriffspunkts 5b und dessen anderer Schenkel auf der Schienenführung 7 auf Seiten des Punktes 5a liegt. Durch Verschieben des Angriffspunkts 5a entlang der Schienenführung 7 beispielsweise nach rechts verkleinert sich der Winkel β, hingegen bewirkt eine Verschiebung nach links eine Vergrößerung des Winkels β. Ein Vergrößern oder Verkleinern des Winkels β abweichend von 90 Grad hat denselben Effekt. Die beiden Schienenführungen 7 nähern sich an, wodurch der Schwenkwinkel α verkleinert wird. Dies ergibt sich aus der konstanten Länge des Kabels 5 sowie der Anordnung der beiden Angriffspunkte, dargestellt in Figur 1.

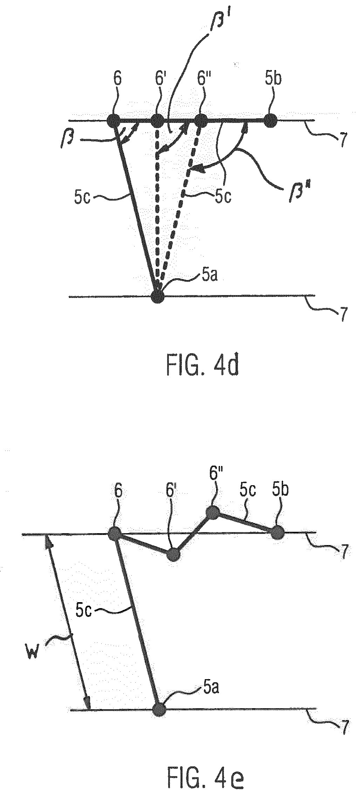

Figur 4d zeigt die Anordnung aus Figur 4a für unterschiedliche Positionen zur gleichen Zeit. So ist es beispielsweise bei Anordnung des Angriffspunkts 6 auf der Schienenführung 7 der Winkel β kleiner 90 Grad in Position des Angriffspunkts 6' ist der Winkel β' gleich 90 Grad und in Position des Angriffspunkts 6" ist der Winkel β" größer 90 Grad. Jedoch ist der Schwenkwinkel α in der Abhängigkeit des Winkels β dann am größten, wenn β gleich 90 Grad ist, wohingegen bei einer Zu- beziehungsweise Abnahme des Winkels β sich der Schwenkwinkel α dergestalt verändert, dass dieser im Vergleich zur Position, in der der Winkel β gleich 90 Grad ist, kleiner wird.

Figur 4e zeigt eine weitere Möglichkeit der Anordnung von Angriffspunkten am Lastenträger, wobei die Angriffspunkte 6' und 6" nicht in der Schienenführung 7 angeordnet sind. Diese können an beliebigen Punkten am Basisrahmen 3 oder auch an der Plattform angeordnet sein.

In Figur 4f sind vier Angriffspunkte 5a, b, 6 und 6' dargestellt. Hierbei sind die beiden Angriffspunkte 5a, b an derselben Schienenführung 7 angeordnet, wobei die Angriffspunkte 6 und 6' an einer weiteren Schienenführung angeordnet sind. Auch hier kann durch Verschieben der Angriffspunkte eine Schwenkwinkeländerung hervorgerufen werden.

Die einzelnen Punkte 5a, b, 6, 6' können fest mit der jeweiligen Schienenführung 7 verbunden sein. Auch ist eine beliebige Anzahl der vorgenannten Punkte beweglich ausgestaltbar, sodass Veränderungen am Schwenkwinkel α möglich sind. Die obigen Ausführungen zur Änderung des Schwenkwinkels α sind hier analog anwendbar.

Die oben erläuterten Anordnungen in den Figuren 4a bis 4f können auch insofern umgekehrt werden, als der Angriffspunkt 5a in der oberen Schienenführung und die Angriffspunkte 5b, 6 usw. in der unteren Schienenführung anordenbar sind.

### BEZUGSZEICHENLISTE

- 1: Lastenträger
- 2: Basisrahmen
- 2a: Aufstandsbefestigung
- 3: Plattform
- 3a: Schiene
- 3b: Befestigungsarm
- 3c: Befestigungsarm
- 4: Gelenk
- 5: Kabel
- 5a: Angriffspunkt
- 5b: Angriffspunkt
- 6: Angriffspunkt
- 6': Angriffspunkt
- 6": Angriffspunkt
- 7: Schienenführung
- α: Winkel
- β: Winkel
- A: Schwenkachse
- S: Stellabschnitt
- W: Wirkabschnitt

## Patentansprüche

1. Lastenträger (1), insbesondere für Fahrräder, mit
- einem Basisrahmen (2), der mit einem Fahrzeug verbindbar ist,
- einer Plattform (3), die an dem Basisrahmen (2) um eine Schwenkachse (A) eines Gelenks (4) schwenkbar angeordnet ist, und
- einem Verbindungselement (5) mit mindestens zwei Angriffspunkten (5a,b) und einem flexiblen Bereich (5c) zwischen den Angriffspunkten,
- wobei ein erster Angriffspunkt (5a) an dem Basisrahmen (2) und ein zweiter Angriffspunkt (5b) an der Plattform (3) angeordnet ist, und
- wobei wenigstens einer der Angriffspunkte (5a, b) entlang einer vorbestimmten Bahnkurve verschiebbar ist,
**dadurch gekennzeichnet, dass**
- das Verbindungselement (5) eine konstante Gesamtlänge aufweist.

2. Lastenträger nach Anspruch 1, **dadurch gekennzeichnet, dass** die vorbestimmte Bahnkurve zumindest eine Richtungskomponente aufweist, die parallel zur Schwenkachse (A) ist.

3. Lastenträger nach Anspruch 1 oder 2, **dadurch gekennzeichnet, dass** die vorbestimmte Bahnkurve einen geradlinigen oder bogenförmigen Verlauf aufweist.

4. Lastenträger nach einem der vorhergehenden Ansprüche, **dadurch gekennzeichnet, dass** durch Verschieben von mindestens einem der zwei Angriffspunkte (5a, b) entlang der Bahnkurve der maximale Schwenkwinkel (α) um das Gelenk (4) veränderbar ist.

5. Lastenträger nach einem der vorhergehenden Ansprüche, **dadurch gekennzeichnet, dass** das Verbindungselement (5), insbesondere der flexible Bereich (5c), zum Aufnehmen von Zugkräften ausgebildet ist.

6. Lastenträger nach einem der vorhergehenden Ansprüche, **dadurch gekennzeichnet, dass** der Basisrahmen (2) und/oder die Plattform (3) eine Schienenführung (7), vorzugsweise eine Schwalbenschwanzführung, aufweisen, wobei vorzugsweise die Schienenführung (7) transversal, parallel oder diagonal bezüglich der Schwenkachse des Lastenträgers (1) anordenbar ist.

7. Lastenträger nach Anspruch 6, **dadurch gekennzeichnet, dass** mindestens ein Angriffspunkt (5a,b) in der Schienenführung (7) anordenbar ist.

8. Lastenträger nach einem der vorhergehenden Ansprüche, **dadurch gekennzeichnet, dass** mindestens einer der Angriffspunkte (5a, b, 6) eine Schraube, einen Niet, eine Metallplatte oder einen Schwalbenschwanz aufweist, vorzugsweise zum verschiebbaren Eingriff in einer Schienenführung (7).

9. Lastenträger nach einem der vorhergehenden Ansprüche, **dadurch gekennzeichnet, dass** der flexible Bereich (5c) ein Kabel, eine Kette, eine Schnur, einen Riemen, einen Gurt, einen Draht oder ein Zugband aufweist.

10. Lastenträger nach einem der vorhergehenden Ansprüche, **dadurch gekennzeichnet, dass** das Verbindungselement (5) einen Werkstoffverbund aus Kunststoffen, einen Stahl oder eine Stahllegierung aufweist.

11. Lastenträger nach einem der vorhergehenden Ansprüche, **dadurch gekennzeichnet, dass** an dem flexiblen Bereich (5c) mindestens ein dritter Angriffspunkt (6) angeordnet ist, der an dem Basisrahmen (2) und/oder an der Plattform (3) angeordnet ist, wobei ein Wirkabschnitt (W) des Verbindungselements (5) einen maximalen Schwenkwinkel (α) um das Gelenk (4) zwischen dem Basisrahmen (2) und der Plattform (3) definiert, wobei sich der Wirkabschnitt (W) zwischen dem ersten Angriffspunkt (5a) des Verbindungselements (5) und dem mindestens einen dritten Angriffspunkt (6) erstreckt, und wobei die Länge des Wirkabschnitts (W) durch die Position des mindestens einen dritten Angriffspunkts (6) relativ zu den Positionen der mindestens zwei Angriffspunkte (5a,b) des Verbindungselements (5) variabel ist, wodurch der maximale Schwenkwinkel (α) um das Gelenk (4) veränderbar ist.

12. Lastenträger nach Anspruch 11, **dadurch gekennzeichnet, dass** das Verbindungselement (5) eine Gesamtlänge aufweist, die sich aus der Länge des Wirkabschnitts (W) und der Länge eines Stellabschnitts (S) zusammensetzt, wobei der Wirkabschnitt (W) die Plattform (3) und den Basisrahmen (2) verbindet, und wobei der Stellabschnitt (S) einen Angriffspunkt (5b) des Verbindungselements (5) und den mindestens einen dritten Angriffspunkt (6) verbindet.

13. Lastenträger nach einem der Ansprüche 11 oder 12, **dadurch gekennzeichnet, dass** der mindestens eine dritte Angriffspunkt (6) am Basisrahmen (2) und/oder an der Plattform (3) beliebig anordenbar ist.

14. Lastenträger nach einem der Ansprüche 11 bis 13, **dadurch gekennzeichnet, dass** der zweite Angriffspunkt (5b) des Verbindungselements (5) und der mindestens eine dritte Angriffspunkt (6) fest mit dem Lastenträger (1) verbunden ist und der erste Angriffspunkt (5a) des Verbindungselements (5) beweglich am Lastenträger (1) ausgebildet ist, um die Länge des Wirkabschnitts (W) durch Veränderung der Position des ersten Angriffspunkts (5a) zu variieren.

15. Lastenträger nach einem der Ansprüche 11 bis 14, **dadurch gekennzeichnet, dass** der erste und der zweite Angriffspunkt (5a, b) mit dem Lastenträger (1) fest verbunden ist und der mindestens eine dritte Angriffspunkt (6) an dem Lastenträger (1) beweglich ausgebildet ist, um die Länge des Wirkabschnitts (W) durch Veränderung der Position des mindestens einen dritten Angriffspunkts (6) zu variieren.

16. Lastenträger nach einem der Ansprüche 11 bis 15, **dadurch gekennzeichnet, dass** der mindestens eine dritte Angriffspunkt (6) außerhalb einer Verbindungsgeraden zwischen erstem und zweiten Angriffspunkt (5a, b) des Verbindungselements (5) liegt.

17. Lastenträger nach einem der Ansprüche 11 bis 16, **dadurch gekennzeichnet, dass** der mindestens eine dritte Angriffspunkt (6) eine Laufrolle zur Führung des flexiblen Bereichs aufweist.

18. Lastenträger nach einem der vorhergehenden Ansprüche, **dadurch gekennzeichnet, dass** das Verbindungselement (5) vier Angriffspunkte aufweist, wobei an jedem der zwei Enden des Verbindungelements jeweils ein Angriffspunkt vorgesehen ist, der an dem Basisrahmen (2) und/oder an der Plattform (3) angeordnet ist, und wobei wenigstens einer der vier Angriffspunkte relativ zu den anderen verschiebbar ist.

19. Lastenträger nach einem der vorhergehenden Ansprüche, **dadurch gekennzeichnet, dass** das Verbindungselement (5) relativ zu zumindest einem der Angriffspunkte verschiebbar ist.

20. Lastenträger nach einem der vorhergehenden Ansprüche, **dadurch gekennzeichnet, dass** der erste und zweite Angriffspunkt (5a,b) des Verbindungselements (5) und/oder der mindestens eine dritte Angriffspunkt (6) und/oder ein vierter Angriffspunkt in einer Schienenführung (7) stufenlos verschiebbar ist.

## Claims

1. Load carrier (1) in particular for bicycles, with
- a base frame (2) which can be connected to a vehicle,
- a platform (3) arranged on the base frame and which can pivot about a pivot axis (A) of an articulation (4), and
- a connection element (5) with at least two attack points (5a,b) and a flexible area (5c) between the attack points,
- wherein a first attact point (5a) is arranged on the base frame (2) and a second attack point (5b) is arranged on the platform (3) and
- wherein at least one of the attack points (5a, b) can be shifted along a predetermined track curve,
**characterized by that**
- the connection element (5) has a constant total length.

2. The load carrier according to Claim 1, **characterized by that** the predetermined track curve comprises at least one directional component parallel to the pivot axis (A).

3. The load carrier according to Claim 1 or 2, **characterized by that** the predetermined track curve has a straight or curved course.

4. The load carrier according to one of the previous claims, **characterized by that** the maximal pivot angle (α) about the articulation (4) can be varied by shifting at least one of the two attack points (5a, b) along the track curve.

5. The load carrier according to one of the previous claims, **characterized by that** the connection element (5), in particular the flexible area (5c), is constructed to receive traction forces.

6. The load carrier according to one of the previous claims, **characterized by that** the base frame (2) and/or the platform (3) comprise(s) a radial guide (7), preferably a dovetail guide, wherein the rail guide (7) can preferably be arranged transversely, parallel to or diagonal to the pivot axis of the load carrier (1).

7. The load carrier according to Claim 6, **characterized by that** at least one attack point (5a,b) can be arranged in the rail guide (7).

8. The load carrier according to one of the previous claims, **characterized by that** at least one of the attack points (5a, b, 6) comprises a screw, a rivet, a metallic plate or a dovetail, preferably for shiftable engagement in a rail guide (7).

9. The load carrier according to one of the previous claims, **characterized by that** the flexible area (5c) comprises a cable, chain, cord, strap, belt, wire or a traction band.

10. The load carrier according to one of the previous claims, **characterized by that** the connection element (5) comprises a material composite consisting of plastics, a steel or a steel alloy.

11. The load carrier according to one of the previous claims, **characterized by that** at least a third attack point (6) is arranged on the flexible area (5c) which attack point is arranged on the base frame (2) and/or on the platform (3), wherein an active section (W) of the connection element (5) defines a maximum pivot angle (α) about the articulation (4) between the base frame (2) and the platform (3), wherein the active section (W) extends between the first attack point (5a) of the connection element (5) and the at least one third attack point (6), and wherein the length of the active section (W) is variable by the position of the at least one third attack point (6) relative to the positions of the at least two attack points (5a,b) of the connection element (5), as a result of which the maximum pivot angle (α) about the articulation (4) can be modified.

12. The load carrier according to Claim 11, **characterized by that** the connection element (5) has a total length which is composed of the length of the active section (W) and the length of an adjustment section (S), wherein the active section (W) connects the platform (3) and the base frame (2), and wherein the adjustment section (S) connects an attack point (5b) of the connection element (5) and the at least one third attack point (6).

13. The load carrier according to one of Claims 11 or 12, **characterized by that** the at least one third attack point (6) can be arranged as desired on the base frame (2) and/or on the platform (3).

14. The load carrier according to one of Claims 11 to 13, **characterized by that** the second attack point (5b) of the connection element (5) and the at least one third attack point (6) are firmly connected to the load carrier (1) and that the first attack point (5a) of the connection element (5) is constructed so that it can move on the load carrier (1) in order to vary the length of the active section (W) by changing the position of the first attack point (5a).

15. The load carrier according to one of Claims 11 to 14, **characterized by that** the first and the second attack point (5a, b) are firmly connected to the load carrier (1) and that the at least one third attack point (6) is movably constructed on the load carrier (1) in order to vary the length of the active section (W) by changing the position of the at least one third attack point (6).

16. The load carrier according to one of Claims 11 to 15, **characterized by that** the at least one third attack point (6) is located outside of a straight connection line between a first and a second attack point (5a, b) of the connection element (5).

17. The load carrier according to one of Claims 11 to 16, **characterized by that** the at least one third attack point (6) comprises a roller for guiding the flexible area.

18. The load carrier according to one of the previous claims, **characterized by that** the connection element (5) has four attack points, wherein an attack point is provided on each of the two ends of the connection element and which is arranged on the base frame (2) and/or on the platform (3), and wherein at least one of the four attack points can be shifted relative to the others.

19. The load carrier according to one of the previous claims, **characterized by that** the connection element (5) can be shifted relative to at least one of the attack points.

20. The load carrier according to one of the previous claims, **characterized by that** the first and the second attack point (5a,b) of the connection element (5) and/or the at least one third attack point (6) and/or a fourth attack point can be continuously shifted in a rail guide (7).

## Revendications

1. Support de charge (1), en particulier pour vélos, comportant
- un cadre de base (2) qui est peut être associé à un vélo,
- une plateforme (3) qui est agencée sur le cadre de base (2) de manière pivotante sur un axe de pivotement (A) d'une articulation (4), et
- un élément de liaison (5) comportant au moins deux points d'application (5a, b) et une zone flexible (5c) située entre les points d'application,
- dans lequel un premier point d'application (5a) est agencé au niveau du cadre de base (2) et un deuxième point d'application (5b) est agencé au niveau de la plateforme (3), et
- dans lequel au moins un des points d'application (5a, b) peut coulisser le long d'une trajectoire prédéterminée,
**caractérisé en ce que**
- l'élément de liaison (5) a une longueur totale constante.

2. Support de charge selon la revendication 1, **caractérisé en ce que** la trajectoire prédéterminée comporte au moins une composante directionnelle qui est parallèle à l'axe de pivotement (A).

3. Support de charge selon la revendication 1 ou 2, **caractérisé en ce que** la trajectoire prédéterminée présente un tracé rectiligne ou incurvée.

4. Support de charge selon l'une quelconque des revendications précédentes, **caractérisé en ce que** l'angle de pivotement (α) maximal autour de l'articulation (4) peut être modifié par coulissement d'au moins un des deux points d'application (5a, b) le long de la trajectoire.

5. Support de charge selon l'une quelconque des revendications précédentes, **caractérisé en ce que** l'élément de liaison (5), en particulier la zone flexible (5c), est conçu pour absorber des forces de traction.

6. Support de charge selon l'une quelconque des revendications précédentes, **caractérisé en ce que** le cadre de base (2) et/ou la plateforme (3) comporte un guide sur rail (7), de préférence un guide en queue d'aronde, dans lequel le guide sur rail (7) peut de préférence être disposé de manière transversale, parallèle ou diagonale par rapport à l'axe de pivotement du support de charge (1).

7. Support de charge selon la revendication 6, **caractérisé en ce qu'**au moins un point d'application (5a, b) peut être disposé dans le guide sur rail (7).

8. Support de charge selon l'une quelconque des revendications précédentes, **caractérisé en ce qu'**au moins un des points d'application (5a, b, 6) comporte une vis, un rivet, une plaque métallique ou une queue d'aronde, destiné de préférence à s'engager de façon coulissante dans un guide sur rail (7).

9. Support de charge selon l'une quelconque des revendications précédentes, **caractérisé en ce que** la zone flexible (5c) comporte un câble, une chaîne, un cordon, une courroie, une sangle, un fil ou une bande de traction.

10. Support de charge selon l'une quelconque des revendications précédentes, **caractérisé en ce que** l'élément de liaison (5) comporte un composite de matières plastiques, un acier ou un alliage d'acier.

11. Support de charge selon l'une quelconque des revendications précédentes, **caractérisé en ce qu'**au moins un troisième point d'application (6) est disposé au niveau de la zone flexible (5c), lequel est disposé au niveau du cadre de base (2) et/ou de la plateforme (3), dans lequel une partie active (W) de l'élément de liaison (5) définit un angle de pivotement (α) maximal autour de l'articulation (4) entre le cadre de base (2) et la plateforme (3), dans lequel la partie active (W) s'étend entre le premier point d'application (5a) de l'élément de liaison (5) et l'au moins un troisième point d'application (6), et dans lequel la longueur de la partie active (W) est variable par la position de l'au moins un troisième point d'application (6) par rapport aux positions des aux moins deux points d'application (5a, b) de l'élément de liaison (5), de façon à pouvoir modifier l'angle de pivotement (α) maximal autour de l'articulation (4).

12. Support de charge selon la revendication 11, **caractérisé en ce que** l'élément de liaison (5) a une longueur totale qui se compose de la longueur de la partie active (W) et de la longueur d'une partie de réglage (S), dans lequel la partie active (W) relie la plateforme (3) et le cadre de base (2), et dans lequel la section de réglage (S) relie un point d'application (5b) de l'élément de liaison (5) et l'au moins un troisième point d'application (6).

13. Support de charge selon l'une quelconque des revendications 11 ou 12, **caractérisé en ce que** l'au moins un troisième point d'application (6) peut être disposé de façon quelconque au niveau du cadre de base (2) et/ou de la plateforme (3).

14. Support de charge selon l'une quelconque des revendications 11 à 13, **caractérisé en ce que** le deuxième point d'application (5b) de l'élément de liaison (5) et l'au moins un troisième point d'application (6) est relié solidairement au support de charge (1) et le premier point d'application (5a) de l'élément de liaison (5) est agencé de manière amovible au niveau du support de charge (1), afin de faire varier la longueur de la partie active (W) par modification de la position du premier point d'application (5a).

15. Support de charge selon l'une quelconque des revendications 11 à 14, **caractérisé en ce que** le premier et le deuxième point d'application (5a, b) est relié solidairement au support de charge (1) et l'au moins un troisième point d'application (6) est agencé de manière amovible au niveau du support de charge (1), afin de faire varier la longueur de la partie active (W) par modification de la position de l'au moins un troisième point d'application (6).

16. Support de charge selon l'une quelconque des revendications 11 à 15, **caractérisé en ce que** l'au moins un troisième point d'application (6) se trouve en dehors d'une droite de liaison entre le premier et le deuxième point d'application (5a, b) de l'élément de liaison (5).

17. Support de charge selon l'une quelconque des revendications 11 à 16, **caractérisé en ce que** l'au moins un troisième point d'application (6) comporte une roulette destinée à guider la zone flexible.

18. Support de charge selon l'une quelconque des revendications précédentes, **caractérisé en ce que** l'élément de liaison (5) comporte quatre points d'application, dans lequel il est prévu respectivement un point d'application à chacune des deux extrémités de l'élément de liaison, lequel point d'application est agencé au niveau du cadre de base (2) et/ou de la plateforme (3), et dans lequel au moins un des quatre points d'application peut coulisser par rapport aux autres.

19. Support de charge selon l'une quelconque des revendications précédentes, **caractérisé en ce que** l'élément de liaison (5) peut coulisser par rapport à au moins un des points d'application.

20. Support de charge selon l'une quelconque des revendications précédentes, **caractérisé en ce que** le premier et le deuxième point d'application (5a, b) de l'élément de liaison (5) et/ou l'au moins un troisième point d'application (6) et/ou un quatrième point d'application peuvent coulisser continument dans un guide sur rail (7).
